# FASCICULE DE BREVET EUROPEEN

(11) **EP 2 567 893 B1**
(45) Date de publication et mention de la délivrance du brevet: **13.11.2013**
(21) Numéro de dépôt: 12006007.4
(22) Date de dépôt: 22.08.2012
(51) Int. Cl.: B64C 27/08, B64C 27/26, B64C 27/28

(54) **Aéronef rapide à grande distance franchissable**
Schnelles Luftfahrzeug für lange Strecken
Long-range high-speed aircraft

(30) Priorité: 12.09.2011 FR 1102741
(43) Date de publication de la demande: 13.03.2013
(73) Titulaire: EUROCOPTER, 13725 Marignane Cédex (FR)
(72) Inventeur: Ferrier, Jean-Jacques, 13880 Velaux (FR); Eglin, Paul, 13830 Roquefort- La Bedoule (FR)
(74) Mandataire: GPI & Associés

(56) Documents cités:
- GB-A- 1 120 658
- US-A- 3 905 565
- US-A1- 2006 269 414

## Description

La présente invention concerne un aéronef à grande distance franchissable et à vitesse d'avancement élevée en vol de croisière.

Ce concept avancé de giravion vise à allier à un coût raisonnable l'efficacité du vol vertical de l'hélicoptère conventionnel aux performances à grande vitesse de déplacement permises par l'utilisation d'hélices propulsives et l'installation de moteurs modernes.

Afin de bien comprendre l'objectif de l'invention, il convient de rappeler que les principaux matériels volants correspondent aux avions et aux giravions.

On désigne sous le nom de giravion tout appareil dont la sustentation est assurée totalement ou partiellement par au moins une voilure tournante. La voilure tournante comporte usuellement au moins un rotor de grand diamètre et d'axe sensiblement vertical lorsque l'appareil est posé au sol.

On distingue dans la catégorie des giravions plusieurs types distincts.

Tout d'abord, l'hélicoptère dont au moins un rotor principal, entraîné par une motorisation appropriée, assure à la fois la sustentation et la propulsion.

Un hélicoptère peut être équipé de deux rotors de sustentation assurant sa sustentation et sa propulsion. Ces deux rotors peuvent être agencés l'un derrière l'autre suivant l'axe longitudinal dudit giravion : on parle alors d'un giravion birotor en tandem.

Dans le cas d'un giravion birotor en tandem, les premier et deuxième rotors de sustentation sont généralement contrarotatifs afin que le couple en lacet généré dans un sens par le premier rotor, soit fortement réduit, voire annulé, par le couple en lacet généré dans l'autre sens par le deuxième rotor. L'effet conjugué du couple en lacet de chaque rotor permet ainsi de stabiliser le giravion par rapport à son axe de lacet en vol rectiligne, sans vent.

Il est à noter qu'il est possible de synchroniser la vitesse de rotation des rotors pour garantir que les pales de ces rotors ne se heurtent pas. On dit alors que les pales sont engrenantes car les pales en rotation du premier rotor présentent un déphasage en azimut constant par rapport aux pales en rotation du deuxième rotor.

On connaît aussi l'autogire qui est un giravion dont le rotor ne reçoit pas de puissance, mais assure la sustentation en tournant en autorotation sous l'effet de la vitesse d'avancement de l'appareil.

Par ailleurs, le girodyne est un giravion intermédiaire entre l'hélicoptère et l'autogire dont le rotor n'assure que la sustentation. Ce rotor est normalement entraîné par une installation motrice pour les phases de décollage, vol stationnaire ou vertical et atterrissage, à l'instar de l'hélicoptère. Un girodyne comporte aussi un système de propulsion additionnel essentiellement différent de l'ensemble rotor. En vol d'avancement, le rotor assure encore la sustentation, mais uniquement en mode autorotation, c'est-à-dire sans transmission de puissance au dit rotor.

On connaît en outre le combiné qui décolle et atterrit comme un hélicoptère, le combiné volant en croisière comme un autogire.

Par ailleurs, le convertible constitue une autre formule particulière de giravion. Cette désignation englobe tous les giravions qui changent de configuration au cours du vol : décollage et atterrissage en configuration hélicoptère, vol de croisière en configuration avion, deux rotors étant par exemple basculés de 90 degrés environ pour servir d'hélices.

De ces différentes formules de giravion, l'hélicoptère est la plus simple de sorte qu'elle s'est imposée malgré le fait que la vitesse maximale de translation de l'hélicoptère de l'ordre de 300 km/h est faible et inférieure à celle envisageable par les formules de type combiné ou convertible, techniquement plus complexes et plus onéreuses.

On connaît une autre formule novatrice dénommée « hélicoptère hybride » par commodité.

Cet hélicoptère hybride comprend un fuselage et un rotor principal destiné à entraîner en rotation des pales grâce à au moins un moteur, avantageusement deux turbomoteurs disposés sur le dessus du fuselage, de part et d'autre par rapport au plan de symétrie longitudinal de l'appareil. De plus, l'hélicoptère hybride est pourvu d'une aile et d'au moins une hélice propulsive.

De plus, l'hélicoptère hybride est équipé d'une chaîne cinématique intégrée, qui outre le moteur, le rotor et l'hélice, comprend un système mécanique d'interconnexion entre ces éléments.

Avec cette configuration, cet hélicoptère hybride est remarquable en ce que les vitesses de rotation des sorties du moteur, du rotor, de l'hélice et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Par conséquent et de façon avantageuse, le rotor demeure toujours entraîné en rotation par le moteur, et développe toujours une portance quelle que soit la configuration de l'hélicoptère hybride, aussi bien en vol d'avancement qu'en vol stationnaire. L'hélicoptère hybride n'est donc ni un autogire, ni un girodyne, ni un combiné mais un nouveau type de giravion.

Cet hélicoptère hybride permet des missions se déroulant pendant des temps prolongés en vol vertical, des vols de croisière à une vitesse élevée mais aussi permet de parcourir de longues distances franchissables, tout en autorisant des vols stationnaires et des décollages verticaux.

Parmi l'état de la technique, on peut citer le document FR2946315 et le document FR2929243.

De plus, parmi les documents présentant des aéronefs munis de deux rotors, on connaît les documents US 200910.216.392 et US 2009/0.014.580

Ces documents US 2009/0.216.392 et US 2009/0.014.580 présentent un aéronef muni de deux rotors en tandem, équipé de part et d'autre de la structure d'une hélice carénée orientable, la carène de chaque hélice étant équipée de plus d'un volet de réorientation du flux du moteur en sortie.

Le document GB 1.120.658, qui représente l'art antérieur le plus proche, présente un aéronef muni de deux rotors en tandem et de moteurs pouvant procurer une poussée en fournissant simultanément une puissance sur un arbre de sortie.

Chaque moteur fait partie d'un groupe motopropulseur incluant une turbine basse pression mettant en rotation une hélice. De plus, chaque moteur inclut une turbine libre pour soit entraîner les deux rotors en tandem, soit participer à l'entrainement de l'hélice du groupe motopropulseur par le biais d'embrayages

Le document US 3.905.565 décrit un système de pilotage pour un aéronef équipé de deux rotors en tandem.

Le document WO 2007/014.531 décrit un aéronef pourvu de deux rotors contrarotatif superposés, ainsi que de deux hélices basculantes.

Les documents US 2006/269.414, US 7.296.767 et US 7.628.355 décrivent un aéronef muni de deux rotors contrarotatifs superposés, associés à une hélice propulsive.

La présente invention a alors pour objet de proposer un aéronef birotor en tandem à grande distance franchissable et à vitesse d'avancement élevée en vol de croisière.

Selon l'invention, un aéronef à grande distance franchissable et à vitesse d'avancement élevée comprend :
- un fuselage s'étendant longitudinalement selon un plan antéropostérieur de symétrie d'une partie arrière vers une partie avant en passant par une partie centrale, le centre de gravité de l'aéronef étant situé dans la partie centrale,
- une voilure tournante munie de deux rotors principaux contrarotatifs agencés en tandem à l'aplomb dudit fuselage, un rotor principal avant étant porté par la partie avant et un rotor principal arrière étant porté par la partie arrière,
- au moins un organe propulsif
- un groupe moteur pour fournir de la puissance aux rotors principaux et à chaque organe propulsif.

On entend alors par « partie centrale », un tronçon de l'aéronef incluant le centre gravité, par « partie avant » un tronçon de l'aéronef partant du nez de l'aéronef pour rejoindre la partie centrale et portant le rotor principal avant, et par « partie arrière » un tronçon de l'aéronef partant de l'extrémité arrière de l'aéronef pour rejoindre la partie centrale et portant le rotor principal arrière.

En outre, on entend par « groupe moteur pour fournir de la puissance aux rotors principaux et à chaque organe propulsif », un groupe moteur générant la rotation des rotors principaux et générant une poussée au travers de l'organe propulsif.

Par ailleurs, on note que le terme « aplomb » fait référence à la position des organes concernés lorsque l'aéronef est posé sur le sol.

De plus, l'aéronef comporte un moyen de contrôle collectif du pas collectif des pales des rotors principaux, tel qu'un moyen de contrôle connu.

Ainsi, au sol notamment, les deux rotors principaux sont agencés à l'aplomb du fuselage.

Cet aéronef est notamment remarquable en ce que :
- chaque organe propulsif est porté par la partie arrière,
- l'aéronef comporte un système d'interconnexion reliant en permanence le groupe moteur à ladite voilure tournante hors cas de panne et d'entraînement,
- l'aéronef comprend un moyen de contrôle différentiel du pas cyclique des pales des rotors principaux pour le contrôle en lacet de l'aéronef,
- et un moyen d'inhibition de chaque organe propulsif.

Cette combinaison permet d'obtenir un aéronef à grande distance franchissable et à vitesse d'avancement élevée présentant un niveau de sécurité optimisé et générant des nuisances sonores limitées.

En effet, en vol d'avancement, les rotors principaux sont toujours entraînés par le groupe moteur, en dehors des cas de panne ou de simulation de cas de panne dans le cadre d'une mission d'entraînement. Toutefois, en vol d'avancement rapide, ces rotors principaux participent essentiellement à la sustentation de l'aéronef, la propulsion étant essentiellement assurée par au moins un organe propulsif.

Dès lors, on comprend que chaque organe propulsif a pour seule fonction de participer à la propulsion de l'aéronef, et non pas de participer au contrôle en lacet de cet aéronef. De plus, on note que le moyen d'inhibition a pour fonction d'arrêter chaque organe propulsif sur requête d'un pilote par exemple.

Chaque organe propulsif ne remplit donc pas une fonction critique et peut être aisément optimisé dans la mesure où chaque organe propulsif a seulement pour fonction de propulser l'aéronef dans certaines phases de vol. On comprend en effet qu'il est plus facile de mettre au point un organe propulsif dédié à la propulsion, qu'un organe propulsif devant par exemple participer au contrôle en lacet de l'aéronef.

Par exemple, en vol stationnaire, le moyen d'inhibition peut inhiber le fonctionnement de chaque organe propulsif, les rotors principaux étant suffisants pour le contrôle en lacet de l'aéronef.

De plus, le moyen d'inhibition peut inhiber le fonctionnement de chaque organe propulsif au sol, aucun organe propulsif n'étant nécessaire pour les manoeuvres au sol. Il en résulte des avantages notables.

On comprend effectivement que les nuisances sonores générées au sol par l'aéronef sont minimisées, aucun organe propulsif ne générant un bruit néfaste au sol lorsqu'il est arrêté.

En outre, aucun organe propulsif ne représente un danger pour les personnes évoluant à proximité de l'aéronef, pour effectuer une opération de chargement/déchargement de l'aéronef par exemple.

Cette caractéristique est maximisée par l'agencement de chaque organe propulsif dans la partie arrière de l'aéronef. Cet agencement rend aussi possible l'utilisation d'un treuil placé à l'aplomb d'une porte latérale et agencé dans la partie centrale par exemple.

Dès lors le moyen d'inhibition peut comprendre :
- un premier dispositif pour minimiser la puissance consommée par l'organe propulsif, tel qu'un dispositif ayant pour fonction de régler l'incidence des pales d'un organe propulsif à hélice à un pas nul en vol stationnaire notamment,
- un deuxième dispositif permettant l'arrêt de l'organe propulsif, notamment au sol, sans entraîner l'arrêt de la voilure tournante.

Enfin, il est à noter que la présence de deux rotors principaux permet de maximiser la capacité d'emport de charge de l'aéronef et de faciliter un vol en autorotation.

Dès lors, la synergie des moyens utilisés confère notamment à l'aéronef la faculté de remplir des missions en haute mer, l'aéronef pouvant d'une part parcourir une grande distance dans un temps raisonnable et d'autre part se poser dans une aire restreinte en générant des nuisances minimisées.

L'architecture de l'aéronef est de plus relativement simple et sûre d'un point de vue sécuritaire.

Cet aéronef peut par ailleurs comprendre une ou plusieurs des caractéristiques additionnelles qui suivent.

Par exemple, le groupe moteur peut comprendre un organe moto-propulsif incluant un moteur thermique et un organe propulsif.

Par exemple, le moteur thermique peut éjecter des gaz qui d'une part entraînent un arbre relié au système d'interconnexion et qui d'autre part sont éjectés par l'organe propulsif pour participer à la propulsion.

Selon une autre variante, le moteur thermique peut éjecter des gaz qui entraînent un arbre d'une part relié au système d'interconnexion et d'autre part relié à un organe propulsif à hélice.

Selon un autre exemple, le moteur thermique peut comprendre un arbre de travail entraînant d'une part le système d'interconnexion et d'autre part une hélice de cet organe moto-propulsif, l'hélice représentant un organe propulsif de l'aéronef.

En outre, selon une première réalisation préférée, l'aéronef comporte au moins deux organes propulsifs disposés transversalement de part et d'autre dudit fuselage.

Selon un vocabulaire emprunté au domaine nautique, l'aéronef peut alors comprendre un organe propulsif « bâbord » fixé à un côté « bâbord » de la partie arrière, et un organe propulsif « tribord » fixé à un côté « tribord » de la partie arrière.

Selon une deuxième réalisation compatible avec la première réalisation, l'aéronef peut comporter un organe propulsif disposé dans le plan antéropostérieur de symétrie de l'aéronef.

Par ailleurs, au moins un organe propulsif peut être un organe à hélice.

Cet organe à hélice peut être caréné pour notamment améliorer la sécurité des personnes au sol.

Selon un autre aspect, l'aéronef peut comporter un moyen de régulation d'une vitesse de rotation des rotors principaux pour maintenir la vitesse de rotation de chaque rotor principal égale à une première vitesse de rotation jusqu'à une première vitesse air sur trajectoire dudit aéronef puis pour réduire cette vitesse de rotation progressivement suivant une loi en fonction de la vitesse air sur trajectoire dudit hélicoptère hybride, telle qu'une loi linéaire par exemple.

Il importe de noter que la possibilité d'atteindre des vitesses air sur trajectoire importantes avec l'aéronef impose de réduire la vitesse de l'écoulement d'air en bout de pales avançantes des rotors principaux, et donc de réduire la vitesse de rotation des rotors principaux, pour éviter tout risque d'apparition de phénomènes de compressibilité dudit écoulement d'air.

Par suite, un autre intérêt de l'invention tient au fait que la vitesse de rotation de chaque rotor principal est égale à une première vitesse de rotation Ω₁ jusqu'à une première vitesse air sur trajectoire V1 puis est réduite de préférence progressivement suivant une loi linéaire en fonction de la vitesse d'avancement de l'aéronef.

En pratique, la vitesse de rotation des rotors principaux est réduite progressivement jusqu'à une deuxième vitesse de rotation Ω₂ correspondant à une deuxième vitesse air sur trajectoire V2 qui est la vitesse maximale de l'aéronef.

Par ailleurs, la partie centrale peut comporter une voilure fixe, au droit du centre de gravité par exemple.

Dès lors, l'aéronef peut comprendre une aile fournissant un complément de portance en vol de croisière pour compenser une éventuelle chute de portance des rotors principaux provoqué par la réduction de leurs vitesses de rotation Ω1, Ω2.

L'aile peut être composée de deux demi-ailes, chaque demi-aile s'étendant de part et d'autre du fuselage. Ces demi-ailes peuvent constituer une aile haute, présentant éventuellement un dièdre. Cependant, elles peuvent aussi constituer soit une aile basse ou encore une aile intermédiaire.

Il est à noter qu'il est généralement délicat de disposer une voilure fixe sous une voilure tournante, la voilure fixe pouvant créer une déportance notamment durant un vol stationnaire.

Cependant, en disposant la voilure fixe dans la partie centrale et dès lors entre les rotors principaux avant et arrière, la déportance générée par la voilure fixe est minimisée.

Par ailleurs, on note que l'aile peut comporter des moyens de contrôle de l'aéronef, de type gouverne et/ou volet par exemple.

Il est possible d'utiliser ces moyens de contrôle pour contrôler l'angle de tangage ou de roulis de l'aéronef à grande vitesse, les rotors principaux participant alors uniquement à la sustentation de l'aéronef. Les moyens de contrôle permettent aussi de contrôler la répartition de portance entre l'aile et la voilure tournante, et de réduire les interactions entre cette voilure tournante et l'aile.

Selon un autre aspect, le rotor principal arrière est éventuellement en surplomb du rotor principal avant. Ainsi, le rotor principal arrière évolue dans un premier plan de sustentation en surplomb d'un deuxième plan de sustentation dans lequel évolue le rotor principal avant.

Il est alors possible de prévoir une garde au sol importante entre chaque organe propulsif et le sol pour maximiser la sécurité des individus évoluant à proximité de l'aéronef, sur une plateforme notamment.

L'invention et ses avantages apparaîtront avec plus de détails dans le cadre de la description qui suit avec des exemples de réalisation donnés à titre illustratif en référence aux figures annexées qui représentent :
- la figure 1, une vue de dessus de l'aéronef,
- la figure 2, une vue de face de l'aéronef, et
- la figure 3, une vue de côté de l'aéronef.

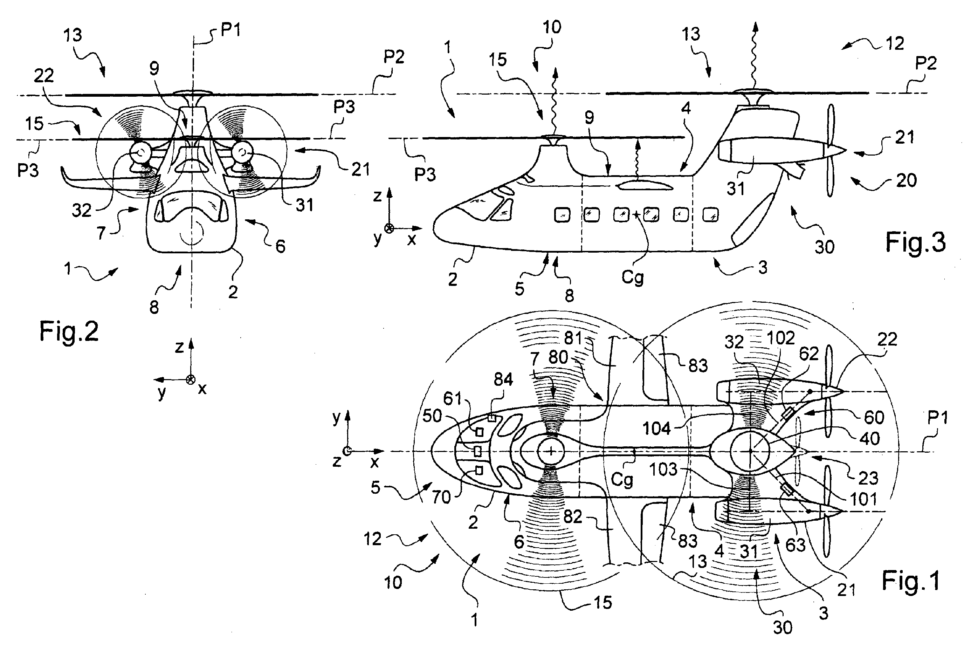

On note que trois directions X, Y et Z orthogonales les unes par rapport aux autres sont représentées sur les figures 1 à 3.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

La figure 1 présente un aéronef 1 à grande distance franchissable muni d'un fuselage 2.

Le fuselage 2 s'étend longitudinalement selon un plan antéropostérieur de symétrie P1 d'une partie arrière 3 vers une partie avant 5, en passant pas une partie centrale 4 dans laquelle est situé la centre de gravité Cg de l'aéronef.

En référence à la figure 2 le fuselage 2 s'étend transversalement d'un premier côté 6 dénommé côté « bâbord » par commodité vers un deuxième côté 7 dénommé « côté tribord ».

En référence à la figure 3, le fuselage 2 s'étend en élévation d'une portion inférieure 8 vers une portion supérieure 9 à l'aplomb de la portion inférieure 8.

De plus, en référence à la figure 1, l'aéronef 1 est muni d'une voilure tournante 10.

La voilure tournante 10 est alors pourvue de deux rotors principaux 12 contrarotatifs. Par suite, cette voilure tournante peut être dénommée « ensemble de voilure tournante » dans la mesure où elle comporte deux rotors principaux 12.

Plus précisément, la voilure tournante 10 inclut un rotor principal arrière 13 porté par la partie arrière 3 et un rotor principal avant 15 porté par la partie avant 5, le rotor principal arrière 13 et le rotor principal avant 15 étant de fait à l'aplomb de la portion supérieure 9 du fuselage 2.

De plus, les carénages de la partie arrière sont favorablement profilés pour obtenir un effet de stabilisation en lacet.

De plus, en référence à la figure 2, le rotor principal arrière 13 évolue dans un premier plan de sustentation P2 en surplomb d'un deuxième plan de sustentation P3 dans lequel évolue le rotor principal avant 15. Il est à noter que l'on entend « plan de sustentation » le plan contenant les pales du rotor principal associé 13 lorsque les mouvements de battement de ces pales sont nuls et en l'absence de pas cyclique.

En référence à la figure 1, l'aéronef 1 comprend notamment un moyen de contrôle différentiel 50 du pas cyclique des pales des rotors principaux pour le contrôle en lacet de l'aéronef. Ce moyen de contrôle différentiel peut inclure un palonnier ou équivalent agissant par des moyens usuels sur le pas cyclique des pales.

Par ailleurs, la partie arrière 4 de l'aéronef porte au moins un organe propulsif 20 participant à la propulsion de l'aéronef 1.

Selon la réalisation préférée de la figure 1, l'aéronef comprend deux organes propulsifs 21, 22 disposés transversalement de part et d'autre dudit fuselage 2. Ainsi, un premier organe propulsif 21 se trouve du premier côté 6 de l'aéronef alors qu'un deuxième organe propulsif 22 se trouve du deuxième côté 7.

De manière alternative ou complémentaire, l'aéronef peut comporter un organe propulsif 23 disposé dans un plan antéropostérieur P1 de symétrie de l'aéronef, représenté à l'aide de traits en pointillés sur la figure 1 uniquement.

Au moins un organe propulsif 20 peut de plus être un organe à hélice, éventuellement caréné.

Par ailleurs, l'aéronef comprend un groupe moteur 30 pour entraîner les rotors principaux 12 et fournir la puissance requise aux organes propulsifs.

Ce groupe moteur 30 peut inclure des moteurs thermiques 31, 32 entraînant un système d'interconnexion 40 mettant en mouvement les rotors principaux. Le système d'interconnexion 40 relie alors en permanence ledit groupe moteur 30 à ladite voilure tournante 10, c'est à dire hors cas de panne accidentel ou simulé.

Ce système d'interconnexion 40 peut comprendre un ensemble mécanique muni d'une boîte de transmission de puissance avant entraînant un mât du rotor principal avant, d'une boîte de transmission de puissance arrière entraînant un mât du rotor principal arrière, et d'au moins un arbre reliant la boîte de transmission avant à la boîte de transmission arrière, ainsi que des chaînes mécaniques 103, 104reliant cet ensemble à chaque moteur du groupe moteur 30.

Le groupe moteur fournit aussi la puissance nécessaire à chaque organe propulsif.

Selon l'exemple représenté, le système d'interconnexion 40 entraîne les organes propulsifs 21, 22 de type organe à hélice par des liaisons mécaniques 101, 102.

Il est à noter que selon une variante alternative, le groupe moteur coopère directement avec les organes propulsifs. D'ailleurs, il est possible d'envisager un organe moto-propulsif remplissant à la fois la fonction d'un moteur entraînant le système d'interconnexion et la fonction d'organe propulsif.

Indépendamment de la réalisation, l'aéronef comporte un moyen d'inhibition 60 de chaque organe propulsif pour arrêter l'organe propulsif au sol ou en vol sans arrêter la rotation des rotors principaux.

Par exemple, le moyen d'inhibition 60 inclut un embrayage 62, 63 entre chaque organe propulsif et le groupe moteur, ainsi qu'un moyen de commande 61 contrôlant les embrayages 62, 63 pour désolidariser les organes propulsifs du groupe moteur.

De plus l'embrayage est complété par un moyen de verrouillage de la liaison mécanique pour éviter les glissements de l'embrayage.

Le moyen d'inhibition peut aussi comprendre un moyen de réglage de l'incidence des pales d'un organe propulsif à hélice, pour par exemple régler cette incidence à un pas nul afin de réduire la consommation d'énergie par l'hélice.

Dès lors le moyen d'inhibition peut comprendre :
- un premier dispositif pour minimiser la puissance consommée par l'organe propulsif, et / ou,
- un deuxième dispositif permettant l'arrêt de l'organe propulsif, notamment au sol, sans entraîner l'arrêt de la voilure tournante.

Selon un autre aspect, l'aéronef comporte un moyen de régulation 70 d'une vitesse de rotation Ω desdits rotors principaux pour maintenir la vitesse de rotation Ω de chaque rotor principal égale à une première vitesse de rotation Ω1 jusqu'à une première vitesse air sur trajectoire V1 de l'aéronef 1, puis pour réduire cette vitesse de rotation Ω progressivement suivant une loi linéaire prédéterminée en fonction de la vitesse air sur trajectoire dudit hélicoptère hybride.

Le moyen de régulation peut comprendre une unité de traitement apte à commander les organes de contrôle du pas des pales des rotors principaux.

En outre, l'aéronef 1 peut comprendre une voilure fixe 80 agencée dans la partie centrale 4. Cette voilure fixe peut inclure une aile munie de moyens de contrôles 83, coopérant avec un moyen de pilotage 84 manoeuvrable par un pilote par exemple.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) à grande distance franchissable et à vitesse d'avancement élevée comprenant :
- un fuselage (2) s'étendant longitudinalement selon un plan antéropostérieur (P1) d'une partie arrière (3) vers une partie avant (5) en passant par une partie centrale (4), le centre de gravité (Cg) de l'aéronef (1) étant situé dans ladite partie centrale (4),
- une voilure tournante (10) munie de deux rotors principaux (12) contrarotatifs agencés en tandem à l'aplomb de dudit fuselage (2), un rotor principal avant (15) étant porté par ladite partie avant (5) et un rotor principal arrière (13) étant porté par ladite partie arrière (3),
- au moins un organe propulsif (20),
- un groupe moteur (30) pour fournir de la puissance auxdits rotors principaux (12) et à chaque organe propulsif (20),
chaque organe propulsif (20) est porté par ladite partie arrière (3)
**caractérisé en ce que** ledit aéronef (1) comporte un système d'interconnexion (40) reliant en permanence ledit groupe moteur (30) à ladite voilure tournante (10) hors cas de panne et d'entraînement, ledit aéronef (1) comprenant un moyen de contrôle différentiel (50) du pas cyclique des pales desdits rotors principaux (12) pour le contrôle en lacet de l'aéronef (1) et un moyen d'inhibition (60) de chaque organe propulsif (20).

2. Aéronef selon la revendication 1,
**caractérisé en ce que** ledit groupe moteur (30) comprend un organe moto-propulsif incluant un moteur thermique et un organe propulsif.

3. Aéronef selon l'une quelconque des revendications 1 à 2,
**caractérisé en ce qu**'il comporte au moins deux organes propulsifs (21, 22) disposés transversalement de part et d'autre dudit fuselage (2).

4. Aéronef selon l'une quelconque des revendications 1 à 3,
**caractérisé en ce qu'**il comporte un organe propulsif disposé dans un plan antéropostérieur (P1) de symétrie de l'aéronef.

5. Aéronef selon l'une quelconque des revendications 1 à 4,
**caractérisé en ce qu'**au moins un organe propulsif (20) est un organe à hélice (21, 22).

6. Aéronef selon la revendication 5,
**caractérisé en ce que** ledit organe à hélice est caréné.

7. Aéronef selon l'une quelconque des revendications 1 à 6,
**caractérisé en ce qu'**il comporte un moyen de régulation (70) d'une vitesse de rotation (Ω) desdits rotors principaux pour maintenir la vitesse de rotation (Ω) de chaque rotor principal égale à une première vitesse de rotation (Ω1) jusqu'à une première vitesse air sur trajectoire (V1) dudit aéronef (1) puis pour réduire cette vitesse de rotation (Ω) progressivement suivant une loi linéaire en fonction de la vitesse air sur trajectoire dudit hélicoptère hybride.

8. Aéronef selon l'une quelconque des revendications 1 à 7, **caractérisé en ce que** ladite partie centrale (4) comporte une voilure fixe (80).

9. Aéronef selon la revendication 8,
**caractérisé en ce que** ladite voilure fixe (80) comporte des moyens de contrôle (83) de l'aéronef.

10. Aéronef selon l'une quelconque des revendications 1 à 9,
**caractérisé en ce que** ledit rotor principal arrière (13) évolue dans un premier plan de sustentation (P2) en surplomb d'un deuxième plan de sustentation (P3) dans lequel évolue le rotor principal avant (15).

## Patentansprüche

1. Luftfahrzeug (1) für lange Strecken und mit erhöhter Reisegeschwindigkeit mit:
- einem Rumpf (2), der sich längs in einer anteroposterioren Ebene (P1) von einem hinteren Teil (3) bis zu einem vorderen Teil (5) über einen mittleren Teil (4) erstreckt, wobei der Schwerpunkt (Cg) des Luftfahrzeugs (1) in dem mittleren Teil (4) gelegen ist,
- einer Drehflügelanordnung (10) mit zwei sich in Gegenrichtung drehenden Hauptrotoren (12), die in Tandemkonfiguration über dem Rumpf (2) angeordnet ist, wobei ein vorderer Hauptrotor (15) von dem vorderen Teil (5) getragen wird, und ein hinterer Hauptrotor (13) von dem hinteren Teil (3) getragen wird,
- mindestens einem Vortriebsorgan (20),
- einer Motorgruppe (30) zum Speisen der Hauptrotoren (12) und eines jeden Vortriebsorgans (20) mit Energie, wobei jedes Vortriebsorgan (20) von dem hinteren Teil (3) getragen wird,
**dadurch gekennzeichnet, dass** das Luftfahrzeug (1) ein Verbindungssystem (40) aufweist, welches ständig die Motorgruppe (30) mit der Drehflügelanordnung (10), außer im Fall einer Störung und beim Antrieb, verbindet, wobei das Luftfahrzeug (1) ein Differentialsteuermittel (50) der zyklischen Rotorblattverstellung der Hauptrotoren (12) für die Regelung des Luftfahrzeugs (1) und ein Mittel (60) zur Sperrung eines jeden Vortriebsorgans (20) aufweist.

2. Luftfahrzeug nach Anspruch 1,
**dadurch gekennzeichnet, dass** die Motorgruppe (30) ein Vortriebsmotororgan aufweist mit einem Verbrennungsmotor und einem Vortriebsorgan.

3. Luftfahrzeug nach einem der Ansprüche 1 bis 2,
**dadurch gekennzeichnet, dass** es mindestens zwei Vortriebsorgane (21, 22) aufweist, die quer zu beiden Seiten des Rumpfes (2) angeordnet sind.

4. Luftfahrzeug nach einem der Ansprüche 1 bis 3,
**dadurch gekennzeichnet, dass** es ein Vortriebsorgan aufweist, welches in einer anteroposterioren Symmetrieebene (P1) des Luftfahrzeugs angeordnet ist.

5. Luftfahrzeug nach einem der Ansprüche 1 bis 4,
**dadurch gekennzeichnet, dass** mindestens ein Vortriebsorgan (20) ein Propellerorgan (21, 22) ist.

6. Luftfahrzeug nach Anspruch 5,
**dadurch gekennzeichnet, dass** das Propellerorgan stromlinienförmig verkleidet ist.

7. Luftfahrzeug nach einem der Ansprüche 1 bis 6,
**dadurch gekennzeichnet, dass** es ein Mittel (70) zur Regelung einer Drehgeschwindigkeit (Ω) der Hauptrotoren aufweist, um die Drehgeschwindigkeit (Ω) eines jeden Hauptrotors auf einer ersten Drehgeschwindigkeit (Ω1) zu halten bis zu einer ersten Fluggeschwindigkeit des Luftfahrzeugs (1) auf einer Strecke (V1), und um diese Drehgeschwindigkeit (Ω) gemäß einer linearen Gesetzmäßigkeit in Abhängigkeit von der Reisegeschwindigkeit auf der Strecke des Hybridhelikopters schrittweise zu senken.

8. Luftfahrzeug nach einem der Ansprüche 1 bis 7,
**dadurch gekennzeichnet, dass** der mittlere Teil (4) feststehende Flügel (80) aufweist.

9. Luftfahrzeug nach Anspruch 8,
**dadurch gekennzeichnet, dass** die feststehenden Flügel (80) Steuermittel (83) des Luftfahrzeugs aufweisen.

10. Luftfahrzeug nach einem der Ansprüche 1 bis 9,
**dadurch gekennzeichnet, dass** der hintere Hauptrotor (13) sich in einer ersten Tragwerksebene (P2) oberhalb einer zweiten Tragwerksebene (P3) bewegt, in der sich der vordere Hauptrotor (15) bewegt.

## Claims

1. Aircraft (1) with a long range and high forward speed comprising:
- a fuselage (2) extending longitudinally in an anteroposterior plane (P1) from a rear part (3) to a front part (5) via a central part (4), the centre of gravity (Cg) of the aircraft (1) being situated in said central part (4),
- a rotary wing (10) provided with two counter-rotating main rotors (12) arranged in tandem directly above said fuselage (2), a front main rotor (15) being carried by said front part (5) and a rear main rotor (13) being carried by said rear part (3),
- at least one propelling unit (20),
- a power plant (30) for supplying power to said main rotors (12) and to each propelling unit (20),
each propelling unit (20) is carried by said rear part (3),
**characterised in that** said aircraft (1) comprises an interconnection system (40) which permanently connects said power plant (30) to said rotary wing (10) except in the event of breakdown and training, said aircraft (1) comprising a control means (50) for differential control of the cyclic pitch of the blades of said main rotors (12) for the yaw control of the aircraft (1) and an inhibiting means (60) for inhibiting each propelling unit (20).

2. Aircraft according to Claim 1,
**characterised in that** said power plant (30) comprises a motive power unit including a heat engine and a propelling unit.

3. Aircraft according to any one of Claims 1 to 2,
**characterised in that** it comprises at least two propelling units (21, 22) arranged transversely on both sides of said fuselage (2).

4. Aircraft according to any one of Claims 1 to 3,
**characterised in that** it comprises a propelling unit arranged in an anteroposterior plane (P1) of symmetry of the aircraft.

5. Aircraft according to any one of Claims 1 to 4,
**characterised in that** at least one propelling unit (20) is a propeller unit (21, 22).

6. Aircraft according to Claim 5,
**characterised in that** said propeller unit is ducted.

7. Aircraft according to any one of Claims 1 to 6,
**characterised in that** it comprises a regulating means (70) for regulating a rotational speed (Ω) of said main rotors in order to maintain the rotational speed (Ω) of each main rotor equal to a first rotational speed (Ω1), up to a first airspeed along the path (V1) of said aircraft (1), and then reduce this rotational speed (Ω) progressively in accordance with a linear relationship as a function of the airspeed along the path of said hybrid helicopter.

8. Aircraft according to any one of Claims 1 to 7,
**characterised in that** said central part (4) comprises a fixed wing (80).

9. Aircraft according to Claim 8,
**characterised in that** said fixed wing (80) comprises aircraft control means (83).

10. Aircraft according to any one of Claims 1 to 9,
**characterised in that** said rear main rotor (13) rotates in a first lift plane (P2) overhanging a second lift plane (P3) in which the front main rotor (15) rotates.
